# EUROPEAN PATENT APPLICATION

(11) **EP 4 696 608 A1**
(43) Date of publication of application: **18.02.2026**
(21) Application number: 24275094.1
(22) Date of filing: 15.08.2024
(51) Int. Cl.: B64G 1/10, B64G 1/24, B64U 101/17, G05D 1/695, G05D 1/698

(54) **VEHICLE MOVEMENT CONTROL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The application relates to a method, computer program and apparatus for controlling movement of a plurality of vehicles, each of said vehicles comprising a receiver, said vehicles provided for estimating a location of a source of a signal receivable by the receiver at each of the vehicles, wherein a method carried out includes causing the plurality of vehicles to move along corresponding ones of a plurality of geocentric paths having substantially the same size, and the step of causing comprises providing navigation information to at least one of the vehicles, to further cause said vehicles to adopt corresponding first to fourth vehicle positions which move along corresponding geocentric paths, wherein the second to fourth vehicle positions are referenced relative to the first vehicle position, said vehicle positions being arranged in a quadrilateral formation.

## Description

### Field

The present disclosure relates to a method of controlling movement of a plurality of vehicles, said vehicles provided for estimating a location of a source of an electromagnetic, e.g. radio, signal receivable at each of the vehicles. Also disclosed is apparatus and computer programs arranged for carrying out said method, a computer-readable medium storing such computer programs.

### Background

It can be desirable to locate a source of an electromagnetic signal emission, e.g. a radio signal transmission, for example a signal source located somewhere on or near the Earth's surface in the case of ground-based or marine-based signal sources, or a signal source in free space. Passive location (e.g. without any requirement to attach a tracking beacon to the source) can be achieved by monitoring for reception of the signal at a plurality of receivers (e.g. usually at least 3). When the positions of said receivers are known, techniques such as multilateration can be used to estimate the location (e.g. a location in free space, or a "geolocation" which is a location on the Earth's surface) of said signal source based on differential factors such as the Time Difference Of Arrival (TDOA) between reception of the signal at each of the receivers. It is desirable that position estimation accuracy, spatial/geographical coverage area, and/or operational efficiency are maximised. However, existing systems and methods have hitherto failed to perform completely satisfactorily. The present disclosure aims to alleviate, at least to an extent, problems associated with existing technology.

### Summary

According to a first aspect of the present disclosure there is provided a method of controlling movement of a plurality of vehicles, each of said vehicles comprising a receiver, said vehicles provided for estimating a location of a source of a signal receivable by the receiver at each of the vehicles, the method comprising: causing the plurality of vehicles to move along corresponding ones of a plurality of geocentric paths having substantially the same size, wherein the step of causing comprises providing navigation information to at least one of the vehicles, to further cause said vehicles to adopt corresponding first to fourth vehicle positions which move along corresponding geocentric paths, wherein the second to fourth vehicle positions are referenced relative to the first vehicle position, said vehicle positions being arranged in a quadrilateral formation. Optionally, the navigation information comprises one or more of: computer program instructions; parameters; commands; positional coordinates; and data from which such instructions, parameters, commands and positional coordinates can be derived.

Optionally, the quadrilateral formation is a rhombus, rhomboid, parallelogram, square or rectangle, with each vehicle position being a vertex of the quadrilateral and being substantially in a common geocentric shell.

Optionally, the quadrilateral has rotational symmetry of 2 or 4, about a central point of the quadrilateral.

Optionally, the quadrilateral is symmetrical about a mean path that is centrally located between the geocentric paths, and/or about a line laying substantially in the geocentric shell and which passes through the centre of the quadrilateral and is normal to the mean path.

Optionally, the geocentric paths are orbital paths and each of the orbital paths have substantially the same eccentricity and argument of periapsis, and optionally wherein the eccentricity of each of the orbital paths is zero.

Optionally, each of the orbital paths have substantially the same inclination, wherein optionally the first vehicle position moves along a first orbital path which has a first RAAN, the first vehicle position having a first true anomaly on the first orbital path; the second vehicle position moves along the first orbital path, and the second vehicle position has a second true anomaly that is referenced to and different from the first true anomaly; the third vehicle position moves along a second orbital path which has a second RAAN that is different from the first RAAN, the third vehicle position having a third true anomaly that is referenced to the first true anomaly; and the fourth vehicle position moves along the second orbital path, and the fourth vehicle position has a fourth true anomaly that is referenced to the first true anomaly and different from the third true anomaly. Optionally, a difference between the first RAAN and the second RAAN defines a predetermined RAAN offset, and the predetermined RAAN offset is substantially 0.1 to 10 degrees, and is optionally 0.5 to 2 degrees, and is optionally about 1 degree. Optionally, the third true anomaly is different from at least one of the first and second true anomalies, and optionally the fourth true anomaly is different from at least the other of the first and second true anomalies. Optionally, a difference between the first true anomaly and the fourth true anomaly defines a predetermined true anomaly offset, the second true anomaly is greater than the first true anomaly by 2/3rds of the true anomaly offset, and the third true anomaly is greater than the first true anomaly by 1/3rd of the true anomaly offset; and optionally the true anomaly offset is substantially 0.1 to 15 degrees, and is optionally 0.5 to 3 degrees, and is optionally about 1.5 degrees.

Optionally, each of the orbital paths have substantially the same inclination, wherein optionally the first vehicle position moves along a first orbital path which has a first RAAN, the first vehicle position having a first true anomaly on the first orbital path; the second vehicle position moves along a second orbital path which has a second RAAN different from the first RAAN, and the second vehicle position has a second true anomaly that is referenced to and different from the first true anomaly; the third vehicle position moves along a third orbital path which has a third RAAN that is different from the first RAAN, the third vehicle position having a third true anomaly that is referenced to the first true anomaly; and the fourth vehicle position moves along a fourth orbital path which has a fourth RAAN that is different from the first to third RAANs, and the fourth vehicle position has a fourth true anomaly that is referenced to the first true anomaly and different from the third true anomaly. Optionally, the second RAAN differs from the third RAAN, and/or the second true anomaly differs from the third true anomaly. Optionally, a difference between the first RAAN and the fourth RAAN defines a predetermined RAAN offset, and the predetermined RAAN offset is substantially 0.1 to 10 degrees, is optionally 0.5 to 2 degrees, and is optionally about 0.8 degrees. Optionally, a difference between the first RAAN and the second RAAN is a first fraction of the predetermined RAAN offset, and a difference between the first RAAN and the third RAAN is a second fraction of the predetermined RAAN offset, wherein the second fraction is smaller than the first fraction, and optionally the first fraction is about 9/16 and the second fraction is about 7/16. Optionally, a difference between the first true anomaly and the fourth true anomaly defines a predetermined true anomaly offset, the second true anomaly is greater than the first true anomaly by about 0.2 of the true anomaly offset, and the third true anomaly is greater than the first true anomaly by about 0.8 of the true anomaly offset; and optionally wherein the true anomaly offset is substantially 0.1 to 10 degrees, is optionally 0.5 to 2 degrees, and is optionally about 1 degree.

Optionally, each of the orbital paths have substantially the same RAAN, wherein optionally the first vehicle position moves along a first orbital path which has a first inclination, the first vehicle position having a first true anomaly on the first orbital path; the second vehicle position moves along the first orbital path, and the second vehicle position has a second true anomaly that is referenced to and different from the first true anomaly; the third vehicle position moves along a second orbital path which has a second inclination that is different from the first inclination, the third vehicle position having a third true anomaly that is referenced to the first true anomaly; and the fourth vehicle position moves along the second orbital path, and the fourth vehicle position has a fourth true anomaly that is referenced to the first true anomaly and different from the third true anomaly. Optionally, a difference between the first inclination and the second inclination defines a predetermined inclination offset, and the predetermined inclination offset is substantially 0.1 to 10 degrees, is optionally 0.5 to 2 degrees, and is optionally about 1 degree. Optionally, the third true anomaly is different from at least one of the first and second true anomalies, and optionally the fourth true anomaly is different from at least the other of the first and second true anomalies. Optionally, a difference between the first true anomaly and the fourth true anomaly defines a predetermined true anomaly offset, the second true anomaly is greater than the first true anomaly by 2/3rds of the true anomaly offset, and the third true anomaly is greater than the first true anomaly by 1/3rd of the true anomaly offset, and optionally the true anomaly offset is substantially 0.1 to 15 degrees, and is optionally 0.5 to 3 degrees, and is optionally about 1.5 degrees.

Optionally, each of the orbital paths have substantially the same RAAN, wherein optionally the first vehicle position moves along a first orbital path which has a first inclination, the first vehicle position having a first true anomaly on the first orbital path; the second vehicle position moves along a second orbital path which has a second inclination different from the first inclination, and the second vehicle position has a second true anomaly that is referenced to and different from the first true anomaly; the third vehicle position moves along a third orbital path which has a third inclination that is different from the first inclination, the third vehicle position having a third true anomaly that is referenced to the first true anomaly; and the fourth vehicle position moves along a fourth orbital path which has a fourth inclination that is different from the first to third inclination, and the fourth vehicle position has a fourth true anomaly that is referenced to the first true anomaly and different from the third true anomaly. Optionally, the second inclination differs from the third inclination, and/or the second true anomaly differs from the third true anomaly. Optionally, a difference between the first inclination and the fourth inclination defines a predetermined inclination offset, wherein the predetermined inclination offset is substantially 0.1 to 10 degrees, is optionally 0.5 to 2 degrees, and is optionally about 0.8 degrees. Optionally, a difference between the first inclination and the second inclination is a first fraction of the predetermined inclination offset, and a difference between the first inclination and the third inclination is a second fraction of the predetermined inclination offset, wherein the second fraction is smaller than the first fraction, and optionally wherein the first fraction is about 9/16 and the second fraction is about 7/16. Optionally, a difference between the first true anomaly and the fourth true anomaly defines a predetermined true anomaly offset, the second true anomaly is greater than the first true anomaly by about 0.2 of the true anomaly offset, and the third true anomaly is greater than the first true anomaly by about 0.8 of the true anomaly offset; and optionally wherein the true anomaly offset is substantially 0.1 to 10 degrees, is optionally 0.5 to 2 degrees, and is optionally about 1 degree.

Optionally, the first vehicle position corresponds to the position of a first vehicle at a first time, the second vehicle position corresponds to the position of a second vehicle at the first time, the third vehicle position corresponds to the position of a third vehicle at the first time, and the fourth vehicle position corresponds to the position of a fourth vehicle at the first time; or the first vehicle position corresponds to the position of a first vehicle at a first time, the second vehicle position corresponds to the position of the first vehicle at a second time later than the first time, the third vehicle position corresponds to the position of a second vehicle at the first time, and the fourth vehicle position corresponds to the position of the second vehicle at the second time.

Optionally, the method further comprises: obtaining a relationship between Dilution of Precision and maximum vehicle separation distance, wherein maximum vehicle separation distance is a largest separation distance between any two of the vehicles, wherein Dilution of Precision is defined as a ratio of (i) root mean square error of an estimated position of the source of the signal to (ii) root mean square error of a measured property of the signal when received by at least one of the vehicles, said measured property being a measured property used to estimate the position; and determining a lower limit of maximum vehicle separation distance based upon a predetermined maximum Dilution of Precision value. Optionally, the method further comprises obtaining a relationship between coverage area and maximum vehicle separation distance, and determining an upper limit of maximum vehicle separation distance based upon a predetermined minimum coverage area. Optionally, the method further comprises: selecting the predetermined maximum Dilution of Precision value and the predetermined minimum coverage area such that the determined lower limit of maximum vehicle separation distance is smaller than the determined upper limit of maximum vehicle separation distance; selecting a vehicle separation distance from a range between the determined lower limit of maximum vehicle separation distance and the determined upper limit of maximum vehicle separation distance; and at least partially determining the navigation information provided in the step of causing, based on the selected vehicle separation distance, to cause said vehicles to adopt the selected vehicle separation distance.

Optionally, distances between adjacent vehicles are substantially equal, and optionally are between about 40 km and about 200km.

Optionally, the geocentric paths pass substantially over or through at least one polar region.

Optionally, each of the vehicles is one of: a spacecraft, an airborne vehicle, and a marine-based vehicle.

According to a second aspect of the present disclosure there is provided one or more controllers each having one or more processors, said controllers configured to carry out the method of the first aspect.

According to a third aspect of the present disclosure there is provided a computer program comprising machine-readable instructions that when executed by one or more processors causes the one or more processors to carry out the method of the first aspect.

According to a fourth aspect of the present disclosure there is provided a computer program arranged for execution on one or more processors of a vehicle, said computer program comprising machine-readable instructions that when executed by said one or more processors causes the one or more processors to act upon obtained navigation information by causing said vehicle to adjust and/or control its position in accordance with said navigation information, wherein the navigation information comprises one or more of: computer program instructions; parameters; commands; positional coordinates; and data from which such instructions, parameters, commands and positional coordinates can be derived, and optionally wherein the information is obtained from a receiver of the vehicle.

According to a fifth aspect of the present disclosure there is provided one or more computer-readable media having stored thereupon the computer program of the third and/or fourth aspects.

According to a sixth aspect of the present disclosure there is provided an apparatus comprising one or more controllers according to the second aspect and/or computer-readable media according to the fourth or fifth aspects.

It will be appreciated in the light of the present disclosure that certain features of certain aspects and/or embodiments described herein can be advantageously combined with those of other aspects and/or embodiments. The following description of specific embodiments should not therefore be interpreted as indicating that all of the described steps and/or features are essential. Instead, it will be understood that certain steps and/or features are optional by virtue of their function or purpose, even where those steps or features are not explicitly described as being optional. The above aspects are thus not intended to limit the scope of the present invention which is instead defined by the appended claims.

### Description of Figures

Aspects of the disclosure may be carried out in various ways and some preferred embodiments will now be described by way of example only and in a non-limiting way with reference to the accompanying drawings, in which:
Figure 1 is a perspective view of a cluster of vehicles, said vehicles having their movement and relative positions controlled according to an embodiment of the disclosure.
Figure 2 is a perspective view of a cluster of vehicles, said vehicles having their movement and relative positions controlled according to another embodiment of the disclosure.
Figure 3 is an illustration of an electromagnetic signal source located within a common coverage area of the cluster of vehicles, also showing individual vehicle coverage areas.
Figure 4 is a graphical plot of (i) a measure of "Dilution of Precision" and (ii) coverage area, versus maximum vehicle separation distance.
Figure 5 is a flow diagram depicting method steps performed by an embodiment of the described method.

### Detailed Description

Passively locating a source of an electromagnetic signal emission, such as a radio signal transmission, on or near the Earth's surface (passive meaning without any need to tag the source with a position determining apparatus such as a GPS receiver, and without any need to transmit a signal towards the source) can be achieved by monitoring for reception of the signal at a plurality of receivers having known positions, and using multilateration to determine the position of said signal source based on differential factors such as Time Difference Of Arrival (TDOA) between reception of the signal at each of the receivers. Such multilateration techniques, and others such as Frequency Difference of Arrival (FDOA), can be used to estimate a location of a "target" signal source, but require the combination and processing of data from multiple receivers of the signal to provide location estimation.

To increase spatial coverage (geographical coverage in the case of geolocation estimation), said receivers are typically mounted on vehicles such as aircraft, marine vessels, or advantageously on orbiting spacecraft (e.g. spacecraft flying in Low Earth Orbit). Said advantages of spacecraft include greater spatial/geographical coverage resulting from greater height above the Earth's surface (or greater distance from a search area of interest), and low propulsion requirements due to low levels of friction in space. Existing techniques have used "trailing", "cluster" or "constellation" formations of satellite-mounted receivers. For example, "trailing" formations can be formed by multiple satellites orbiting on the same path, each one following the previous one separated by a specific time interval to either view a target at different times or to obtain varied views of it. "Cluster" formations can be formed by satellites in a dense arrangement. "Constellation" formations are made of several satellites with coordinated ground coverage, operating together under shared control. An existing passive location technique uses data from three spacecraft located in three different orbital planes (with minimal difference in inclination and argument of perigee/periapsis) in a pseudo-aligned "trailing" formation. Existing methods of positioning receivers (and thus existing methods of controlling movement of vehicles upon which receivers are mounted), have proved successful but not entirely optimal. The present disclosure overcomes, at least to an extent, drawbacks in said existing methods, as will be described below.

It has been found by the inventors that accuracy, spatial/geographical coverage area, and (to an extent) operational efficiency, depend upon the number of receivers employed, their spatial separation, and their geometric arrangement relative to each other. It has further been found that location accuracy is dependent upon the geometry of the formation of receivers, and on the maximum size of the formation (e.g. the number of receivers). In particular, it has been found that the accuracy with which the location of a signal source can be estimated is improved by basing the estimation upon the signal as received at four positions (e.g. rather than the three positions as used in some existing multilateration techniques), in a quadrilateral formation, such as a diamond formation. Such a formation improves location estimation accuracy, partly due to a reduction in signal perturbation from Earth's atmosphere, and partly due to an increase in a maximum separation distance between receivers, which minimises dilution of measurement precision. It has been found that a slight reduction in ground coverage due to increased receiver separation distance is compensated for by an accompanying increase in location estimation accuracy. The present disclosure thus relates to close formation flying for the purpose of simultaneous data collection (within the electromagnetic spectrum) to locate/define parameters attributable to transmission source, specifically to the formation definition of a cluster of spacecraft or other vehicles, and to a method by which that cluster can be maintained on the basis of a reference vehicle in said cluster, wherein (e.g. orbital) motion parameters for each vehicle are defined with reference to a given reference vehicle, such that parameters of the non-reference vehicles are those of the reference vehicle but with different RAAN and true anomaly so as to yield a stable formation of vehicles (e.g. spacecraft placed in a number of orbital planes). Such a formation is suited to the purpose of performing measurement or collecting data simultaneously at several vehicles by virtue of its stability (and thus maintainability), and by virtue of its even distribution of vehicles across an elliptical plane region of space lying nominally tangential to respective orbital paths.

Although the techniques described herein are envisaged as being used in connection with receivers mounted on orbiting spacecraft moving along orbital paths, the disclosed techniques are applicable to receivers mounted upon aircraft flying along paths that are not strictly-speaking "orbits" but nevertheless are circular/elliptical, and geocentric, termed herein "geocentric paths", which are thereby at least partially equivalent to an orbital path (or at least a part of such a path). Similarly, the disclosed techniques can be applied to receivers mounted on marine craft travelling along at least a part of a geocentric path (e.g. along at least part of a circular path around the perimeter of the Earth). Provided that the receiver positions are known (noting that obtaining such knowledge is assisted by the receivers being located on, and/or travelling along, respective defined paths such as at least partial segments of respective geocentric paths, e.g. circular paths around the Earth, and optionally geocentric orbital paths, since their locations are then constrained to said paths), then such differential receiver techniques can be used to estimate a location of a signal source. For example, data corresponding to the received signal can be sent from each vehicle to a common processing station where data from each vehicle can be collated and processed using multilateration techniques, to thereby estimate the location of the signal source. It is also noted that in the case of marine-vehicle-mounted receivers, although their elevation above the Earth's surface is relatively small, it is possible that they may be used to locate a signal source that is higher above them. Thus, the following description should not be interpreted as being limited to said receivers being mounted only on such spacecraft. In the case of geolocating a signal (i.e. when a signal source location is known to be somewhere on the Earth's surface), multilateration techniques can be combined with a further constraint, namely that the location is known to be on the Earth's surface, to simplify the task of searching for the location and to increase the accuracy thereof.

In advantageous embodiments (e.g. when the vehicles are spacecraft), the geocentric paths are orbital paths and each of the orbital paths have substantially the same eccentricity and argument of periapsis (perigee). In a specific embodiment, the eccentricity of each of the orbital paths is zero (corresponding to circular orbital paths). As is defined by convention, an elliptical orbit has two focal points, one of which is centred upon the Earth in the case of a geocentric orbit. Eccentricity is related to the width of the orbit along its longer (major) axis, compared to the width of the orbit along its shorter (minor) axis. A circular orbit has an eccentricity of zero, with both focal points coincident. The periapsis (or perigee in the case of a geocentric orbit) is the point where the orbit crosses its major axis at a point closest to the geo-centred focus, and the argument of periapsis is the angle in the orbital plane between (i) a point at which the ascending side of the orbital plane intersects the Earth's equatorial plane, and (ii) the periapsis.

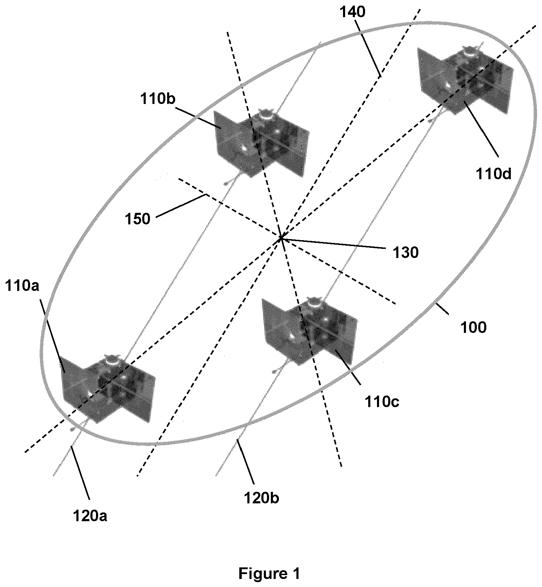

Referring to Figure 1, a receiver formation 100 is shown having first to fourth vehicle positions 110a-110d. Each vehicle has mounted thereon a receiver for receiving a signal transmitted by a signal source that is to be located. By way of example, each of the four receivers employ an omnidirectional Very-High Frequency (VHF) antenna to capture a signal of interest emitted by a source that is to be located. The vehicles travel in close vicinity, so as to be able to detect a maximum number of common targets (e.g. signal sources of interest) on the Earth's surface, since minimising vehicle separation maximises coverage area, however, conversely, to maximise location accuracy a minimum separation needs to be guaranteed between all the vehicles in the formation (or "cluster").

As shown in Figure 1, a plurality of vehicles are, at a time or times, positioned at first to fourth vehicle positions 110a-110d. The first and second vehicle positions 110a,110b are located on a first geocentric path 120a (e.g. a first orbital path which lies in a first orbital plane), and the third and fourth vehicle positions 110c,110d are located on a second geocentric path 120b (e.g. a second orbital path which lies in a second orbital plane). The vehicles move along their corresponding geocentric paths 120a, 120b, while the first vehicle position 110a serves as a reference position for the second to fourth vehicle positions 110b-110d, such that the second to fourth vehicle positions 110b-110d are referenced to (e.g. positioned relative to) the first vehicle position 110a.

In an embodiment, the four vehicle positions 110a-110d represent the positions of four respective vehicles at a particular moment in time. In other words, the first vehicle position corresponds to the position of a first vehicle at a first time, the second vehicle position corresponds to the position of a second vehicle at the first time, the third vehicle position corresponds to the position of a third vehicle at the first time, and the fourth vehicle position corresponds to the position of a fourth vehicle at the first time.

It should be noted, however, that in an alternative embodiment the first and third positions represent the positions of two respective vehicles at a first moment in time and the second and fourth positions represent the positions of the two respective vehicles at a second moment in time. In other words, the first vehicle position corresponds to the position of a first vehicle at a first time, the second vehicle position corresponds to the position of the first vehicle at a second time later than the first time, the third vehicle position corresponds to the position of a second vehicle at the first time, and the fourth vehicle position corresponds to the position of the second vehicle at the second time. Thus, when used with appropriate multilateration techniques such as those including Doppler Rate Difference of Arrival, the disclosed vehicle arrangement (and methods of providing said arrangement) can be used to provide electromagnetic (e.g. radio) signal source location estimation with fewer vehicles/receivers than with existing techniques.

In the particular embodiment shown in Figure 1, each of the orbital paths have substantially the same inclination (the angle between the Earth's equatorial plane and the orbital plane) as each other, and differ by their Right Ascension of the Ascending Node (RAAN - the angle in the equatorial plane between the position of the Sun at the March Equinox, and the point at which the orbital plane's ascending side intersects the equatorial plane). It will be noted, however, that alternatively, each of the orbital paths can instead have substantially the same RAAN as each other, and have differing inclinations. Thus, the following disclosure of the embodiment shown in Figure 1 and Table 1 can also be read in such an alternative context, with the word "inclination" substituted for the term "RAAN" and vice-versa.

When the first and second orbital paths 120a,120b have substantially the same inclination: the first vehicle position 110a moves along the first orbital path 120a which has a first RAAN, with the first vehicle position having a first true anomaly on the first orbital path 120a; the second vehicle position 110b moves along the first orbital path 120a, the second vehicle position 110b having a second true anomaly that is referenced to and different from the first true anomaly; the third vehicle position 110c moves along a second orbital path 120b which has a second RAAN that is different from the first RAAN, the third vehicle position 110c having a third true anomaly that is referenced to the first true anomaly; and the fourth vehicle position 110d moves along the second orbital path 120b, the fourth vehicle position having a fourth true anomaly that is referenced to the first true anomaly and different from the third true anomaly. In this way: the vehicles move along two orbital paths 120a, 120b in respective orbital planes which have substantially the same size (e.g. defined by the semi-major axis length), eccentricity (e.g. 0 which corresponds to circular orbits), inclination, and argument of periapsis, but have different RAANs (which e.g. differ by 1 degree); and as the vehicles move along said orbital paths 120a,120b, they occupy corresponding vehicle positions 110a-110d which are separated by having RAANs and different true anomalies (corresponding to the distance travelled along the orbital paths). However, since the second to the fourth vehicle positions 110b-110d are referenced to the first vehicle position 110a, all four vehicle positions move in lock-step, thereby maintaining a substantially constant quadrilateral formation 100.

In such embodiments, a difference between the first RAAN and the second RAAN defines a predetermined RAAN offset, and by way of example the predetermined RAAN offset is substantially 0.1 to 10 degrees, optionally 0.5 to 2 degrees, and preferably about 1 degree. Optionally, the third true anomaly is different from at least one of the first and second true anomalies, but it will be appreciated that by a pseudo-rotation of the quadrilateral arrangement, the third true anomaly can optionally be the same as either of the first or second true anomalies, and in such cases the fourth true anomaly can be different from at least the other of the first and second true anomalies. More specifically, optionally a difference between the first true anomaly and the fourth true anomaly defines a predetermined true anomaly offset, the second true anomaly is greater than the first true anomaly by about 2/3rds of the true anomaly offset, and the third true anomaly is greater than the first true anomaly by about 1/3rd of the true anomaly offset. Further optionally, the true anomaly offset is substantially 0.1 to 15 degrees, is optionally 0.5 to 3 degrees, and is preferably about 1.5 degrees. For example, Table 1 shows example parameters for the first to fourth vehicle positions 110a-110d that have been found to give advantageous performance in terms of coverage area and position estimation accuracy. Alternatively, with reference to Figure 1 it can be seen that with an anti-clockwise pseudo-rotation of the second and third vehicle positions 110b,110c, said second and third vehicle positions 110b,110c can have the same value of true anomaly, while maintaining a quadrilateral arrangement. Furthermore, it will be seen that if there was chosen an increase of the first and second true anomalies and a decrease of the third and fourth true anomalies, that could result in a set of parameters with matching first and third true anomalies and matching second and fourth true anomalies, while maintaining a quadrilateral arrangement. The values shown in Table 1 define a formation geometry by a set of parameters in the Earth Centred Inertial (ECI) reference frame for each of four vehicle (e.g. spacecraft) positions, and that arrangement has been found to deliver increased position estimation accuracy, along with acceptable coverage area. The increased accuracy results at least partially from the vehicles being located at the same orbital altitude, which tends to result in each receiver being subject to the same (e.g. atmospheric) perturbations and differences in orbital dynamics, which factors therefore cancel out, minimising errors in position estimation which could otherwise result.

**Table 1**

| **Vehicle position** | **Semi Major Axis** | **Inclination** | **Eccentricity** | **Right Asc. of Asc. Node** | **Argument of Perigee** | **True Anomaly** |
|---|---|---|---|---|---|---|
| 1st - 110a | Reference | Reference | 0 | Reference | Reference | Reference |
| 2nd - 110b | Ref. + 0 km | Ref. + 0° | 0 | Ref. + 0° | Ref. + 0° | Ref. + 1° |
| 3rd - 110c | Ref. + 0 km | Ref. + 0° | 0 | Ref. + 1° | Ref. + 0° | Ref. + 0.5° |
| 4th - 110d | Ref. + 0 km | Ref. + 0° | 0 | Ref. + 1° | Ref. + 0° | Ref. + 1.5° |

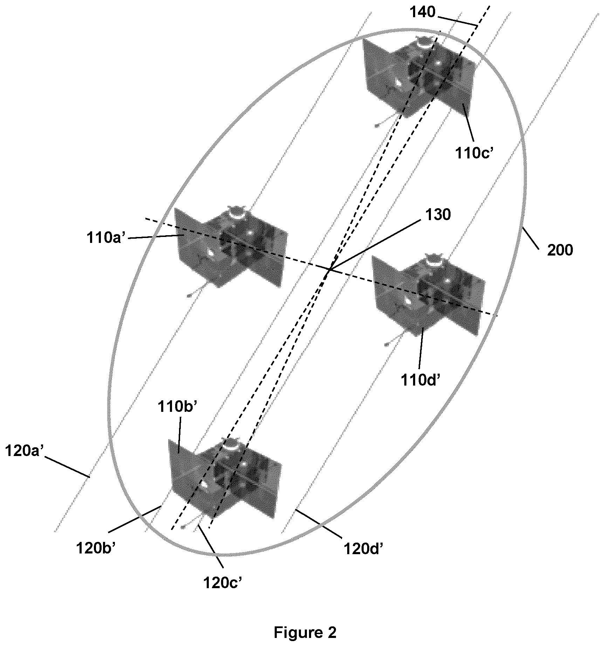

Referring to Figure 2, an alternative receiver formation 200 is shown, with first to fourth positions 110a'-110d' illustrated.

As shown, a plurality of vehicles can be positioned at respective first to fourth vehicle positions 110a'-110d'. The first to fourth vehicle positions 110a'-110d' are located on respective first to fourth geocentric paths 120a'-120d' (e.g. each orbital path laying in a respective orbital plane). The vehicles move along their corresponding geocentric paths 120a'-120d, while the first vehicle position 110a' serves as a reference position for the second to fourth vehicle positions 110b'-110d', such that the second to fourth vehicle positions 110b'-110d' are referenced relative to the first vehicle position 110a', and so the four vehicle positions 110a'-110d' move substantially in lock-step with each other thereby maintaining a quadrilateral formation.

In the particular embodiment illustrated with Figure 2, each of the orbital paths 120a'-120d' have substantially the same inclination as each other, and have differing RAAN parameters. However, alternatively each of the orbital paths 120a'-120d' can instead have substantially the same RAAN as each other, and have differing inclinations, and so the disclosure below with reference to Figure 2 and Table 2 can alternatively be read with the word "inclination" substituted for the term "RAAN", and vice-versa.

When the first to fourth orbital paths 120a'-120d' have substantially the same inclination: the first vehicle position 110a' moves along the first orbital path 120a' which has a first RAAN, the first vehicle position having a first true anomaly on the first orbital path 120a'; the second vehicle position 110b' moves along the second orbital path 120b' which has a second RAAN different from the first RAAN, the second vehicle position 110b' having a second true anomaly that is referenced to and different from the first true anomaly; the third vehicle position 110c' moves along a third orbital path 120c' which has a third RAAN that is different from the first RAAN, the third vehicle position 110c' having a third true anomaly that is referenced to the first true anomaly; and the fourth vehicle position 110d' moves along the fourth orbital path 120d' which has a fourth RAAN that is different from the first to third RAANs, the fourth vehicle position 110d' having a fourth true anomaly that is referenced to the first true anomaly and different from the third true anomaly. In this way: the vehicles are caused to move along respective orbital paths 120a'-120d' in respective orbital planes which have substantially the same size (e.g. defined by the semi-major axis length), eccentricity (e.g. 0 which corresponds to circular orbits), inclination, and argument of periapsis, but have different RAANs; and as the vehicles move along said orbital paths 120a'-120d', they occupy corresponding vehicle positions 110a'-110d' which are separated by having different true anomalies (corresponding to the distance travelled along the respective orbital paths 120a'-120d').

In such embodiments, optionally the second RAAN differs from the third RAAN, and/or the second true anomaly differs from the third true anomaly. Optionally, a difference between the first RAAN and the fourth RAAN defines a predetermined RAAN offset, and the predetermined RAAN offset is substantially 0.1 to 10 degrees, is optionally 0.5 to 2 degrees, and is preferably about 0.8 degrees. Optionally, a difference between the first RAAN and the second RAAN is a first fraction of the predetermined RAAN offset, and a difference between the first RAAN and the third RAAN is a second fraction of the predetermined RAAN offset, the second fraction is smaller than the first fraction, and preferably the first fraction is about 9/16 and the second fraction is about 7/16. Optionally, a difference between the first true anomaly and the fourth true anomaly defines a predetermined true anomaly offset, the second true anomaly is greater than the first true anomaly by about 0.2 of the true anomaly offset, and the third true anomaly is greater than the first true anomaly by about 0.8 of the true anomaly offset; and optionally the true anomaly offset is substantially 0.1 to 10 degrees, is optionally 0.5 to 2 degrees, and is preferably about 1 degree.

Table 2 shows example parameters for the first to fourth vehicle positions 110a'-110d', which parameters have been found to provide a quadrilateral formation that advantageously provides a good combination of coverage area and location estimation accuracy. With reference to Figure 2, it can be seen that rotations of the first to fourth vehicle positions 110a'-110d' could be applied about the central point 130, which would result in alternative parameters while maintaining a quadrilateral arrangement. The values shown in Table 2 define a formation geometry as shown in Figure 2 which has been found to deliver increased position estimation accuracy, especially when the paths pass near to polar regions, compared to the formation in Figure 1. This is because, contrary to the formation in Figure 1 which has only two orbital paths (which tend to converge if they pass over polar regions, thereby reducing receiver spacing and consequently reducing position estimation accuracy), the formation defined in Table 2 comprises four different orbital paths/planes, with differing RAAN parameters, and thereby overlap at polar regions is minimised, which increases accuracy at polar regions. Thus, the four-orbital-path cluster formation described with reference to Figure 2 and Table is particularly advantageous in cases where the paths pass over or near to polar regions. Increased accuracy (compared with existing approaches) also results at least partially from the vehicles being located at the same orbital altitude, which tends to result in each receiver being subject to the same (e.g. atmospheric) perturbations and differences in orbital dynamics, which factors therefore cancel out, thereby minimising errors in position estimation which could otherwise result from those factors.

**Table 2**

| **S/C Name** | **Semi Major Axis** | **Inclination** | **Eccentricity** | **Right Asc. of Asc. Node** | **Argument of Perigee** | **True Anomaly** |
|---|---|---|---|---|---|---|
| S/C-a | Reference | Reference | 0 | Reference | Reference | Reference |
| S/C-b | Ref. + 0 km | Ref. + 0° | 0 | Ref. + 0.45° | Ref. + 0° | Ref. + 0.2° |
| S/C-c | Ref. + 0 km | Ref. + 0° | 0 | Ref. + 0.35° | Ref. + 0° | Ref. + 0.8° |
| S/C-d | Ref. + 0 km | Ref. + 0° | 0 | Ref. + 0.8° | Ref. + 0° | Ref. + 1° |

As shown in Figure 1 (and similarly in Figure 2), the first to fourth vehicle positions 110a-110d are arranged in a quadrilateral formation, such as a rhombus, rhomboid, parallelogram, square or rectangle formation, with each vehicle position 110a-110d being a vertex of said quadrilateral. Each vehicle position 110a-110d is substantially in a common geocentric shell, e.g. having a substantially same radius from the Earth's centre, such that over the maximum separation distance between the four vehicle positions 110a-110d the surface of said shell can be approximated as a flat plane that is parallel to the Earth's surface. A central point 130 between the four vehicle positions 110a-110d is shown, through which a mean path 140 is centrally located between (e.g. runs equidistant from) the first and second geocentric paths 120a,120b. The quadrilateral formation preferably has one or both of: rotational symmetry of 2 or 4 around the central point 130; and symmetry about the mean path 140, and/or optionally about a transverse line 150 which lies substantially in the common geocentric shell and which passes through the centre of the quadrilateral (central point 130) and is normal to the mean path 140. Such symmetry assists with the accuracy of location estimation, and can simplify the processing of the received signals, leading to greater accuracy and/or efficiency.

During operation, formation maintenance is performed to maintain vehicle altitudes, to ensure the same orbital dynamic and minimum formation drift, and to maintain the quadrilateral (e.g. diamond) formation, through vehicle phasing. Periodic manoeuvres are performed to maintain the specified vehicle formation, thereby ensuring the most accurate location results.

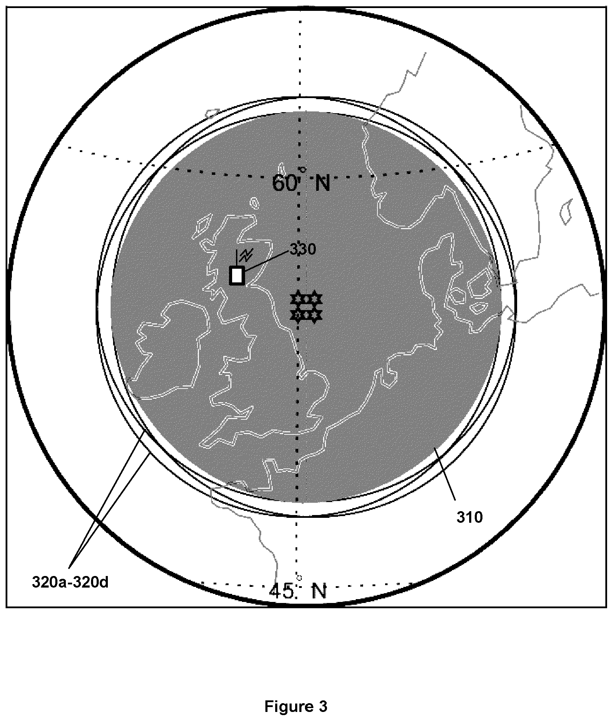

As shown in Figure 3, each of the four receivers employ an omnidirectional Very-High Frequency (VHF) antenna to capture transmissions of interest (for which location is to be estimated), such as signal source 330. A characteristic of an omnidirectional antenna is to receive signals equally from all directions, and this behaviour is modelled as a purely spherical antenna pattern (as shown by separate offset circles 320a-320d corresponding to individual coverage areas for each of the respective receivers, that being the intersection of the respective antenna patterns with a spherical Earth). A common coverage area 310, projected onto the Earth's surface, is the intersection of the individual coverage areas, which results in an approximately circular projected area. The circular common coverage area 310 can be calculated for a given angle of elevation (measured as the angle from a horizontal plane on the Earth's surface to the line of sight between the point of signal transmission and a respective one of the receivers). The common coverage area 310 (see Figure 3) is ideally maximised to optimize revisit time performance of the vehicle cluster, however maximising common coverage area 310 requires minimisation of the maximum separation distance between vehicles (the maximum separation distance being the largest separation distance between any two of the vehicles), and reducing separation distance decreases position estimation accuracy. A trade-off must therefore be reached between coverage area and accuracy.

Location accuracy can be measured through the concept Dilution of Precision (DOP), where a low DOP indicates good position estimation precision/accuracy. Dilution of Precision is defined as a ratio of (i) root mean square error of an estimated position of the source of the signal to (ii) root mean square error of a measured property of the signal when received by at least one of the vehicles, said measured property being a measured property used to estimate the position.

Increasing separation distance between vehicles increases the Time Difference of Arrival (TDOA) and so as a consequence provides higher location estimation precision. However, increasing vehicle separation causes a reduction in common coverage area 310, which may be detrimental to operating costs and/or update frequency (due to lower revisits and reduced time over a target area).

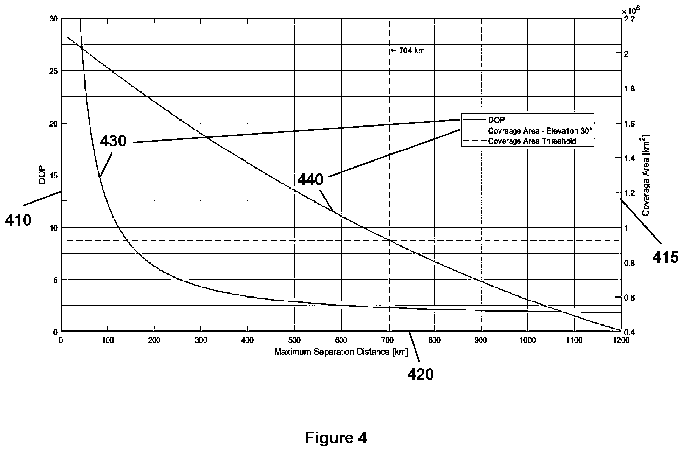

Thus, referring to Figure 4, a relationship 430 between Dilution of Precision 410 and maximum vehicle separation distance 420 (which refers to the largest distance between any two vehicles of the cluster) can be obtained, and a lower limit of maximum vehicle separation distance 420 can be determined based upon a predetermined maximum Dilution of Precision value. For example, a maximum acceptable DOP ratio of 30 could be defined, which would permit a lower limit of maximum vehicle separation to be as small as around 40 km.

A relationship 440 between coverage area 415 and maximum vehicle separation distance 420 can also be obtained, and a maximum vehicle separation distance (i.e. the largest distance between any two vehicles of the cluster) can be determined based upon a predetermined minimum coverage area. For example, a minimum coverage area of about 0.9km² could be defined, which would permit an upper limit of maximum vehicle separation to be as large as 704 km.

On the face of it, provided that the determined lower limit of maximum vehicle separation distance is smaller than the determined upper limit of maximum vehicle separation distance, then any value of maximum vehicle separation distance can be selected from between those two bounds, and then navigation information based on that separation distance can be generated and provided to the vehicles to cause them to adopt optimal positions which will satisfy the constraints of minimum coverage area and maximum DOP.

However, it has been realised by the inventors that although minimisation of DOP would permit an upper limit of maximum separation distance between vehicles of 704 km, while still allowing an acceptable ground coverage circle of 30° elevation, such high vehicle separation distances would detract from Equivalent Signal to Noise Ratio (ESNR) when combined between vehicles, and would increase atmospheric effects on TDOA measurements. Thus, for these reasons, the vehicle cluster formation is preferably operated so as to maintain a quadrilateral (e.g. diamond shaped) formation (such as defined in Table 1 or Table 2) with an upper limit of maximum vehicle separation distance of about 200 km and a lower limit of maximum vehicle separation distance of about 40 km.

Each of the vehicles comprises one or more processors configured for executing a stored computer program comprising machine-readable instructions (e.g. stored on one or more machine-readable media of said vehicle) that when executed by said one or more processors causes the one or more processors to act upon obtained navigation information by causing said vehicle to control (e.g. adjust and/or maintain) its position in accordance with said navigation information. The navigation information can be obtained via a receiver of the vehicle, and can comprise one or more of: computer program instructions; parameters; commands; positional coordinates; and data from which such instructions, parameters, commands and positional coordinates can be derived. For example, the vehicles can comprise built-in programming that can receive navigation information via a receiver of the vehicle, and use said navigation information to control actuators of various kinds to cause said vehicle to position itself and/or maintain a course, as instructed by a ground station that sent the navigation information to the vehicle. Alternatively, the vehicles can be arranged to receive updated programming from a remote entity such as the ground station, wherein said programming is specially arranged to cause said vehicle to position itself and/or maintain a course as intended. Additionally, one or more of the vehicles can be arranged to receive data and/or programming from a remote entity such as a ground station, and relay that information to other vehicles. Additionally, vehicles can be arranged to receive or sense information relating to positions and/or courses of other vehicles in the vehicle formation, and to autonomously determine course corrections so as to maintain positions in a desired formation. For example, one of the vehicles can be designated as a master vehicle, and accept flight parameters as absolute values, while other vehicles in the formation can be designated as subordinates which are referenced to the master vehicle, such that their flight parameters are treated as being relative to the master vehicle's parameters. Optionally, the master vehicle might receive flight parameters for all of the vehicles, and relay received parameters for subordinate vehicles on to the subordinate vehicles. Other variations will be apparent to the skilled person, the overriding requirement being that it is provided that vehicles respond to navigation information appropriately so as to arrange themselves into the formation that the navigation information instructs them to adopt.

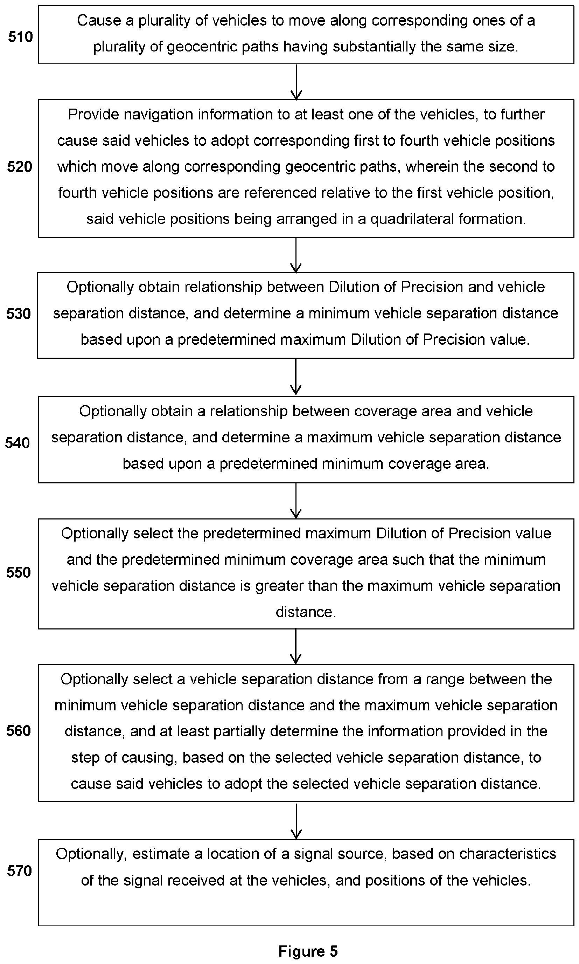

Referring to Figure 5, a method carried out in embodiments of the above-described scheme will now be described. Said method relates to controlling movement of a plurality of vehicles such as those described above, each of said vehicles comprising a receiver capable of receiving a signal from a signal source, and said vehicles provided for estimating a location of the signal source. The method comprises causing 510 the plurality of vehicles to move along corresponding ones of a plurality of geocentric paths having substantially the same size. The "size" of a geocentric path corresponds to its radius in the case of a circular path centred upon the Earth's centre, however in the more general case of an elliptical geocentric path, the "size" refers to the semi-major axis, i.e. half of the length of the longest axis through the two focal points of the ellipse. The step of causing 510 comprises providing 520 navigation information to at least one of the vehicles, to further cause said vehicles to adopt corresponding first to fourth vehicle positions which move along corresponding geocentric paths, wherein the second to fourth vehicle positions are referenced relative to the first vehicle position, said vehicle positions being arranged in a quadrilateral formation. The navigation information comprises one or more of: computer program instructions; parameters; commands; positional coordinates; and data from which such instructions, parameters, commands and positional coordinates can be derived. By virtue of being provided with such navigation information, said vehicles are able to (and are caused to) control their movement so as to move along corresponding ones of the plurality of geocentric paths, with appropriate spacing (e.g. in terms of RAAN or inclination, and true anomaly parameters) such that the vehicles are arranged in the quadrilateral formation, which can be any of a rhombus, rhomboid, parallelogram, square or rectangle, with each vehicle position being a vertex of the quadrilateral and being substantially in a common geocentric shell. It will be appreciated that by the step of providing 520, navigation information to at least one of the vehicles, to cause said vehicles to adopt corresponding first to fourth vehicle positions which move along corresponding geocentric paths, wherein the second to fourth vehicle positions are referenced relative to the first vehicle position, said vehicles can be caused to be positioned (e.g. caused to position themselves) in any of the formations described above with reference to Figures 1 and 2, and with reference to the example formation parameters in Tables 1 and 2.

The method optionally continues with a step of obtaining 530 a relationship between Dilution of Precision and maximum vehicle separation distance (where maximum vehicle separation distance is a largest separation distance between any two of the vehicles). The term "Dilution of Precision", or DOP, is defined as a ratio of (i) the root mean square error of an estimated position of the source of the electromagnetic (e.g. radio or light) signal that is being located, to (ii) the root mean square error of a measured property of the signal when received by at least one of the vehicles. The "measured property" is a property that is measured and then used to estimate the position (e.g. Time Difference Of Arrival - TDOA, or Frequency Difference Of Arrival - FDOA). This step further includes determining a lower limit for the maximum vehicle separation distance, based upon a predetermined maximum Dilution of Precision (DOP) value. For example, it could be decided that the maximum acceptable DOP value is 10, which would then yield a certain lower limit for the maximum vehicle separation distance.

The method option also continues with a step of obtaining 540 a relationship between coverage area and maximum vehicle separation distance, and determining an upper limit of maximum vehicle separation distance based upon a predetermined minimum coverage area. For example, it could be decided that a minimum coverage area of 1km^{z} is required if an area of the Earth's surface of a particular size is to be completely scanned with a certain repeat frequency, and from that minimum coverage area and the relationship, an upper limit for the maximum vehicle separation distance can be determined.

Clearly, if a value of maximum vehicle separation distance is to be chosen which satisfies both the maximum Dilution of Precision requirement and the minimum coverage area requirement, it is necessary for the constraints to be set such that the upper limit is greater than the lower limit. Thus, the method optionally continues with a step of selecting 550 the predetermined maximum Dilution of Precision value and the predetermined minimum coverage area such that the determined lower limit of maximum vehicle separation distance is smaller than the determined upper limit of maximum vehicle separation distance.

The method optionally continues with a step of selecting 560 a maximum vehicle separation distance from a range between the determined lower limit of maximum vehicle separation distance and the determined upper limit of maximum vehicle separation distance. Any selection from within this range should satisfy both the maximum Dilution of Precision requirement and the minimum coverage area requirement. In certain embodiments, the maximum vehicle separation distance (i.e. the largest distance between any two vehicles) is between about 40km and about 200km, but other values can be optimal depending upon the particular orbital parameters in use.

The method then optionally continues with a step of at least partially determining 570 (i.e. determining at least a part of) the navigation information that is provided to the vehicles in the step of causing 510, said determining 570 being based on the selected vehicle separation distance. In certain embodiments, it can be advantageous if the distances between vehicles in the formation are substantially equal, since the resulting symmetry can assist with cancelling signal perturbations and/or can assist with simplifying the calculations required to convert properties of the received signals into a position estimate.

Since the navigation information that is provided to the vehicles is based on the selected maximum vehicle separation distance, which satisfies both the maximum Dilution of Precision requirement and the minimum coverage area requirement, the steps of causing 510 and providing 520, in combination, cause the vehicles to adopt a quadrilateral formation having the selected maximum vehicle separation distance. Thus the vehicles are caused to be positioned in a formation which is advantageous in terms of stability, and for meeting accuracy and coverage requirements, thereby providing for enhanced location estimation of a source of a signal that is receivable by the vehicles.

Optionally, the step of estimating 570 a location of a signal source is performed, based on (i) characteristics of the signal received at the vehicles, and (ii) positions of the vehicles. For the aforementioned reasons, the resulting estimated position is of greater accuracy (due to optimised DOP) and efficiency (due to optimised coverage area).

Advantages and technical effects of aspects and embodiments, including those mentioned above, will be apparent to a skilled person from the foregoing description and from the Figures.

It will be appreciated that the described methods can be carried out by one or more computers or controllers, having one or more processors, under control of one or more computer programs arranged to carry out said methods, said computer programs being stored in one or more memories and/or other kinds of computer-readable media. An example of a networked computer system which can be used to implement the methods described herein will now be described, said computer system comprising one or more cloud servers incorporating one or more databases and hosting one or more web-based applications, one or more gateways, and one or more computing devices (such as a PC, tablet and/or mobile device) for accessing said web application, wherein said cloud servers and said computing devices are communicatively coupled with each other by a computer network. Said computer network can comprise one or more of any kinds of computer network suitable for transmitting or communicating data, for example a local area network, a wide area network, a metropolitan area network, the Internet, a wireless communications network, a cable network, a digital broadcast network, a satellite communication network, a telephone network, etc. Each of the one or more gateways, cloud servers and/or computing devices can operate under control of one or more computer programs arranged to carry out all or a subset of method steps described with reference to any embodiment, thereby interacting with one another so as to collectively carry out the described method steps. Each of the one or more gateways, cloud servers and/or computing devices can comprise a processor, memory, computer-readable storage medium, output interface, input interface and network interface, which can communicate with each other by virtue of one or more data buses. It will be appreciated that one or more of these features may be omitted, depending on the required functionality of said system. Said computer-readable storage medium may be any form of non-volatile and/or non-transitory data storage device such as a magnetic disk or optical disk, or other memory device such as RAM or ROM or Flash memory, and may store data, application program instructions according to one or more embodiments of the disclosure herein, and/or an operating system. The storage medium may be local to the processor, or may be accessed via a computer network or bus. The processor can be any apparatus capable of carrying out method steps according to embodiments of the invention, and can for example comprise a single data processing unit or multiple data processing units operating in parallel or in cooperation with each other, and/or can be implemented as a programmable logic array, graphics processor, or digital signal processor, or a combination thereof. The input interface is arranged to receive input from a user and provide it to the processor, and can comprise, for example, a mouse (or another pointing device), a keyboard and/or a touchscreen device. The output interface optionally provides a visual, tactile and/or audible output to a user of the system, under control of the processor.

It will be appreciated that the above-described partitioning of functionality can be altered without affecting the functionality of the methods and systems, or their advantages/technical effects. The above-described functional partitioning is presented as an example in order that the invention can be understood, and is thus conceptual rather than limiting, the invention being defined by the appended claims. The skilled person will also appreciate that the described method steps may be combined or carried out in a different order without affecting the advantages and technical effects resulting from the invention as defined in the claims. It will be further appreciated that the described functionality can be implemented as hardware (for example, using field programmable gate arrays, ASICs or other hardware logic), firmware and/or software modules, or as a mixture of those modules. It will also be appreciated that, a computer-readable storage medium and/or a transmission medium (such as a communications signal, data broadcast, communications link between two or more computers, etc.), carrying a computer program arranged to implement one or more aspects of the invention, may embody aspects of the invention. The term "computer program," as used herein, refers to a sequence of instructions designed for execution on a computer system, and may include source or object code, one or more functions, modules, executable applications, applets, servlets, libraries, and/or other instructions that are executable by a computer processor.

Various modifications may be made to the preferred embodiments described herein without departing from the scope of the invention as defined by the accompanying claims. Many combinations, modifications, or alterations to the features of the above embodiments will be readily apparent and are intended to form part of the disclosure. Any of the features described specifically relating to one embodiment or example may be used in any other embodiment by making appropriate changes as apparent in the light of the above disclosure.

## Claims

1. A method of controlling movement of a plurality of vehicles, each of said vehicles comprising a receiver, said vehicles provided for estimating a location of a source of a signal receivable by the receiver at each of the vehicles, the method comprising:
causing the plurality of vehicles to move along corresponding ones of a plurality of geocentric paths having substantially the same size,
wherein the step of causing comprises providing navigation information to at least one of the vehicles, to further cause said vehicles to adopt corresponding first to fourth vehicle positions which move along corresponding geocentric paths, wherein the second to fourth vehicle positions are referenced relative to the first vehicle position, said vehicle positions being arranged in a quadrilateral formation.

2. The method of claim 1, wherein the navigation information comprises one or more of: computer program instructions; parameters; commands; positional coordinates; and data from which such instructions, parameters, commands and positional coordinates can be derived.

3. The method of any preceding claim, wherein the quadrilateral formation is a rhombus, rhomboid, parallelogram, square or rectangle, with each vehicle position being a vertex of the quadrilateral and being substantially in a common geocentric shell, and optionally wherein the quadrilateral has rotational symmetry of 2 or 4, about a central point of the quadrilateral; and optionally wherein the quadrilateral is symmetrical about a mean path that is centrally located between the geocentric paths, and/or about a line laying substantially in the geocentric shell and which passes through the centre of the quadrilateral and is normal to the mean path.

4. The method of any preceding claim, wherein the geocentric paths are orbital paths and each of the orbital paths have substantially the same eccentricity and argument of periapsis, and optionally wherein the eccentricity of each of the orbital paths is zero.

5. The method of claim 4, wherein each of the orbital paths have substantially the same inclination.

6. The method of claim 5, wherein:
the first vehicle position moves along a first orbital path which has a first RAAN, the first vehicle position having a first true anomaly on the first orbital path;
the second vehicle position moves along the first orbital path, and the second vehicle position has a second true anomaly that is referenced to and different from the first true anomaly;
the third vehicle position moves along a second orbital path which has a second RAAN that is different from the first RAAN, the third vehicle position having a third true anomaly that is referenced to the first true anomaly; and
the fourth vehicle position moves along the second orbital path, and the fourth vehicle position has a fourth true anomaly that is referenced to the first true anomaly and different from the third true anomaly; and optionally:
(i) wherein a difference between the first RAAN and the second RAAN defines a predetermined RAAN offset, and wherein the predetermined RAAN offset is substantially 0.1 to 10 degrees; and/or
(ii) wherein the third true anomaly is different from at least one of the first and second true anomalies, and optionally the fourth true anomaly is different from at least the other of the first and second true anomalies; and/or
(iii) wherein a difference between the first true anomaly and the fourth true anomaly defines a predetermined true anomaly offset, the second true anomaly is greater than the first true anomaly by 2/3rds of the true anomaly offset, and the third true anomaly is greater than the first true anomaly by 1/3rd of the true anomaly offset.

7. The method of claim 5, wherein:
the first vehicle position moves along a first orbital path which has a first RAAN, the first vehicle position having a first true anomaly on the first orbital path;
the second vehicle position moves along a second orbital path which has a second RAAN different from the first RAAN, and the second vehicle position has a second true anomaly that is referenced to and different from the first true anomaly;
the third vehicle position moves along a third orbital path which has a third RAAN that is different from the first RAAN, the third vehicle position having a third true anomaly that is referenced to the first true anomaly; and
the fourth vehicle position moves along a fourth orbital path which has a fourth RAAN that is different from the first to third RAANs, and the fourth vehicle position has a fourth true anomaly that is referenced to the first true anomaly and different from the third true anomaly; and optionally:
(i) wherein the second RAAN differs from the third RAAN, and/or the second true anomaly differs from the third true anomaly; and/or
(ii) wherein a difference between the first RAAN and the fourth RAAN defines a predetermined RAAN offset, wherein the predetermined RAAN offset is substantially 0.1 to 10 degrees, and a difference between the first RAAN and the second RAAN is a first fraction of the predetermined RAAN offset, and a difference between the first RAAN and the third RAAN is a second fraction of the predetermined RAAN offset, wherein the second fraction is smaller than the first fraction; and/or
(iii) wherein a difference between the first true anomaly and the fourth true anomaly defines a predetermined true anomaly offset, the second true anomaly is greater than the first true anomaly by about 0.2 of the true anomaly offset, and the third true anomaly is greater than the first true anomaly by about 0.8 of the true anomaly offset.

8. The method of claim 4, wherein each of the orbital paths have substantially the same RAAN.

9. The method of claim 8, wherein:
the first vehicle position moves along a first orbital path which has a first inclination, the first vehicle position having a first true anomaly on the first orbital path;
the second vehicle position moves along the first orbital path, and the second vehicle position has a second true anomaly that is referenced to and different from the first true anomaly;
the third vehicle position moves along a second orbital path which has a second inclination that is different from the first inclination, the third vehicle position having a third true anomaly that is referenced to the first true anomaly; and
the fourth vehicle position moves along the second orbital path, and the fourth vehicle position has a fourth true anomaly that is referenced to the first true anomaly and different from the third true anomaly; and optionally:
(i) wherein a difference between the first inclination and the second inclination defines a predetermined inclination offset, and wherein the predetermined inclination offset is substantially 0.1 to 10 degrees; and/or
(ii) wherein the third true anomaly is different from at least one of the first and second true anomalies, and optionally the fourth true anomaly is different from at least the other of the first and second true anomalies; and/or
(iii) wherein a difference between the first true anomaly and the fourth true anomaly defines a predetermined true anomaly offset, the second true anomaly is greater than the first true anomaly by 2/3rds of the true anomaly offset, and the third true anomaly is greater than the first true anomaly by 1/3rd of the true anomaly offset.

10. The method of claim 8, wherein:
the first vehicle position moves along a first orbital path which has a first inclination, the first vehicle position having a first true anomaly on the first orbital path;
the second vehicle position moves along a second orbital path which has a second inclination different from the first inclination, and the second vehicle position has a second true anomaly that is referenced to and different from the first true anomaly;
the third vehicle position moves along a third orbital path which has a third inclination that is different from the first inclination, the third vehicle position having a third true anomaly that is referenced to the first true anomaly; and
the fourth vehicle position moves along a fourth orbital path which has a fourth inclination that is different from the first to third inclination, and the fourth vehicle position has a fourth true anomaly that is referenced to the first true anomaly and different from the third true anomaly; and optionally:
(i) wherein the second inclination differs from the third inclination, and/or the second true anomaly differs from the third true anomaly; and/or
(ii) wherein a difference between the first inclination and the fourth inclination defines a predetermined inclination offset, wherein the predetermined inclination offset is substantially 0.1 to 10 degrees, and a difference between the first inclination and the second inclination is a first fraction of the predetermined inclination offset, and a difference between the first inclination and the third inclination is a second fraction of the predetermined inclination offset, wherein the second fraction is smaller than the first fraction; and/or
(iii) wherein a difference between the first true anomaly and the fourth true anomaly defines a predetermined true anomaly offset, the second true anomaly is greater than the first true anomaly by about 0.2 of the true anomaly offset, and the third true anomaly is greater than the first true anomaly by about 0.8 of the true anomaly offset.

11. The method of claim 6 or 9, wherein:
the first vehicle position corresponds to the position of a first vehicle at a first time, the second vehicle position corresponds to the position of a second vehicle at the first time, the third vehicle position corresponds to the position of a third vehicle at the first time, and the fourth vehicle position corresponds to the position of a fourth vehicle at the first time; or
the first vehicle position corresponds to the position of a first vehicle at a first time, the second vehicle position corresponds to the position of the first vehicle at a second time later than the first time, the third vehicle position corresponds to the position of a second vehicle at the first time, and the fourth vehicle position corresponds to the position of the second vehicle at the second time.

12. The method of any preceding claim, further comprising:
obtaining a relationship between Dilution of Precision and maximum vehicle separation distance, wherein maximum vehicle separation distance is a largest separation distance between any two of the vehicles, wherein Dilution of Precision is defined as a ratio of (i) root mean square error of an estimated position of the source of the signal to (ii) root mean square error of a measured property of the signal when received by at least one of the vehicles, said measured property being a measured property used to estimate the position; and
determining a lower limit of maximum vehicle separation distance based upon a predetermined maximum Dilution of Precision value; and optionally further comprising
obtaining a relationship between coverage area and maximum vehicle separation distance, and determining an upper limit of maximum vehicle separation distance based upon a predetermined minimum coverage area; and optionally further comprising:
selecting the predetermined maximum Dilution of Precision value and the predetermined minimum coverage area such that the determined lower limit of maximum vehicle separation distance is smaller than the determined upper limit of maximum vehicle separation distance;
selecting a vehicle separation distance from a range between the determined lower limit of maximum vehicle separation distance and the determined upper limit of maximum vehicle separation distance; and
at least partially determining the navigation information provided in the step of causing, based on the selected vehicle separation distance, to cause said vehicles to adopt the selected vehicle separation distance.

13. A computer program comprising machine-readable instructions that when executed by one or more processors causes the one or more processors to carry out the method of any of claims 1 to 12.

14. One or more computer-readable media having stored thereupon a computer program as defined in claim 13.

15. An apparatus comprising one or more processors arranged to execute the computer program of claim 13.
